# EUROPEAN PATENT APPLICATION

(11) **EP 1 950 983 A1**
(43) Date of publication of application: **30.07.2008**
(21) Application number: 06722150.7
(22) Date of filing: 24.03.2006
(51) Int. Cl.: H04Q 7/22

(54) **A SYSTEM AND METHOD FOR DATA PUSHING**

(30) Priority: 11.11.2005 CN 200510115218
(71) Applicant: Lenovo (Beijing) Limited, Haidan District, Beijing 100085 (CN)
(72) Inventor: TIAN, Rihui, Haidian District, Beijing 100085 (CN); SHI, Donghai, Haidian District, Beijing 100085 (CN); HONG, Lei, Haidian District, Beijing 100085 (CN); WANG, Wei, Haidian District, Beijing 100085 (CN)
(74) Representative: Stöckeler, Ferdinand
(86) International application number: PCT/CN2006/000498
(87) International publication number: WO 2007/053988

(57) **Abstract**

The present invention relates to a method and system for data pushing used in pushing data to be pushed from a server to a mobile terminal. The system comprises a server configured to, after learning there are data to be pushed in an information system, search for the phone number corresponding to the mobile terminal from phone numbers pre-stored in the server and call the mobile terminal via a mobile phone network by using a phone call system, and a mobile terminal configured to check an incoming call number from the phone call system according to an informing phone number that is pre-stored in the mobile terminal and corresponds to the server, not answer the phone call but obtain the data to be pushed from the sever via a mobile data network if the incoming phone number is the informing phone number, otherwise perform a.normal phone call processing.

## Description

### BACKGROUND OF THE INVENTION

### FIELD OF INVENTION

The present invention relates to a method and system for data pushing, and in particular to a method and system for pushing data to a mobile terminal by use of a phone call.

### DESCRIPTION OF PRIOR ART

In applications of mobile data, when data or information in an information system is changed or updated, the system usually needs to inform this to users autonomously. Such information system refers to a system for information management, including mainly those systems for corporation applications, such as email system and customer relation management system for corporation. In addition, the above information systems include systems provided to the public or corporation users by some mobile operator or Internet server provider, like web email system.

Currently, application programs on mobile devices including smart mobile phone, palm computer and laptop computer generally access an information system over certain mobile data network. Mobile data network technologies including GPRS/CDMA/3G transmit data with Internet protocol (TCP/IP). The information system cannot always autonomously push data to a mobile terminal through TCP/IP at any time, since a user may often take his or her mobile device and move around. Two types of techniques have been proposed and used widely in order to solve the above problem.

### First method

The mobile terminal is connected to a data network, such as GPRS or CDMA network, and uses pull method to simulate push method in the form of polling, so as to obtain updated data from the information system. This method requires the mobile terminal to maintain the connection with a wireless network all the time. This results in large battery consumption in the mobile device. Meanwhile, the method gives rise to an increase in invalid data flow between the mobile terminal and a server and increase in payment. Further, this method carries out the pushing method by means of time triggering and thus is weak in real time performance, thereby failing in real time transmission of updated data to the mobile terminal.

### Second method

The server informs the mobile terminal of the existence of updated data using a short message. Then, the mobile terminal is connected with the server over the mobile data network and obtains updated data from the server. Compared with the first method, the method requires less increase in battery consumption of the mobile terminal. Unfortunately, since the transmission of short message is not free of charge, the user has to pay more fees if frequent data push is needed.

Further, the short message system is not a reliable message system and susceptible to a long delay or message losing in the case the network is busy.

Therefore, the existing solutions mainly have disadvantages of
1. poor performance of real time characteristic,
2. requirement for a long-term connection between the mobile terminal and the mobile data network, resulting in large battery consumption in the mobile terminal,
3. requirement for additional payment.

It is desirable to design a new method and system for data pushing.

### SUMMARY OF THE INVENTION

The first object of the present invention is to provide a real time data push system which requires low battery consumption in a mobile terminal and no additional fee.

The second object of the present invention is to provide a real time data push method which requires low battery consumption in a mobile terminal and no additional fee.

According to the first object of the present invention, a data push system is provided for pushing data to be pushed from a server to a mobile terminal. The system comprises
a server configured to, after learning data to be pushed is presented in an information system, search for the phone number corresponding to the mobile terminal from phone numbers pre-stored in the server and call the mobile terminal via a mobile phone network by using a phone call system, and
a mobile terminal configured to check an incoming call number from the phone call system according to an informing phone number that is pre-stored in the mobile terminal and corresponds to the server, not answer the phone call but obtain the data to be pushed from the sever via a mobile data network if the incoming phone number is the informing phone number, otherwise perform a normal phone call processing.

According to the second object of the present invention, a data push method is provided for pushing data to be pushed from a server to a mobile terminal. The method comprises
when data to be pushed is presented in an information system, searching for the phone number corresponding to the mobile terminal from phone numbers pre-stored in the server and calling the mobile terminal via a mobile phone network by using a phone call system, and
checking an incoming call number from the phone call system according to an informing phone number that is pre-stored in the mobile terminal and corresponds to the server, not answer the phone call but obtain the data to be pushed from the sever via a mobile data network if the incoming phone number is the informing phone number, otherwise perform a normal phone call processing.

The present invention has the advantage of implementing real time data push, since the data push system and method of the present invention informs the mobile terminal by way of a phone call, and such phone call is only used to trigger the mobile terminal in performing data reception and needs not to be answered. Meanwhile, the present invention has a very small influence on the power consumption of the mobile terminal, since the mobile terminal is not required to always connect with the mobile data network. Further, no additional fee has to be paid for the user.

### BRIEF DESCRIPTION OF THE DRAWINGS

Fig. 1 shows an overview block diagram of a data push system 1 according to the present invention.
Fig. 2. shows a detailed block diagram of a mobile terminal 2 in the data push system 1 according to the present invention.
Fig. 3 shows a detailed block diagram of a mobile data application server 6 in the data push system 1 according to the present invention.
Fig. 4 shows a detailed flow of a data push method performed by the data push system 1 according to the present invention.
Fig. 5 shows an embodiment of the data push system 1 used for corporation email according to the present invention.

### DETAILED DESCRIPTION OF PREFERRED EMBODIMENTS

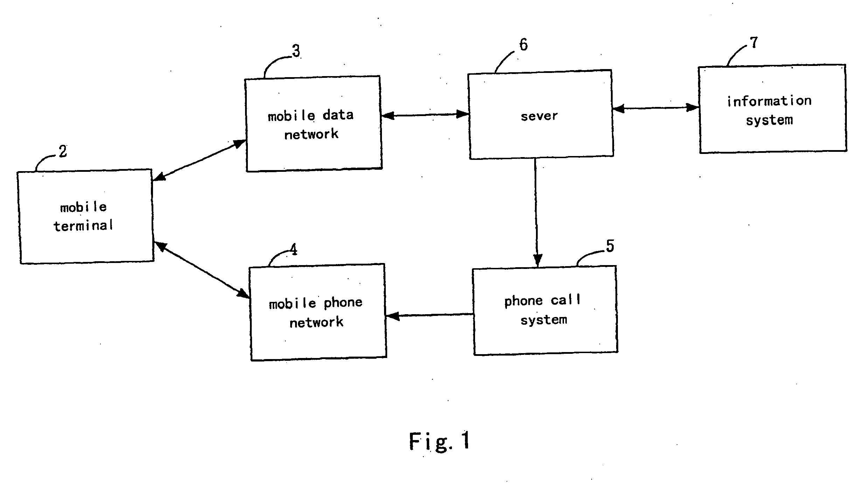

Fig. 1 shows an overview block diagram of a data push system 1 according to the present invention.

As shown in Fig.1, the data push system 1 comprises a mobile terminal 2, a mobile data network 3, a mobile phone network 4, a phone call system 5, a mobile data application sever 6 and an information system 7. The mobile terminal 2 is connected to the mobile data application sever 6 via the mobile data network 3 and is connected to the phone call system 5 via the mobile phone network 4. The mobile data application sever 6 is connected with the phone call system 5 directly or via a network.

When there is data to be pushed in the information system 7 and the mobile data application sever 6 is informed, or when the mobile data application sever 6 checks the information system 7 and finds the presence of new or updated data in the information system 7, the mobile data application sever 6 searches for the pre-stored phone number corresponding to the user's mobile terminal 2 and calls the mobile terminal 2 over the mobile phone network 4 by using the phone call system 5, if the data needs to be pushed to a user.

Thereafter, the mobile terminal 2 checks the phone number called by the phone call system 5. If the number is the informing phone number corresponding to the mobile data application sever 6; the mobile terminal 2 does not answer the phone call. Instead, it obtains the data to be pushed directly from the mobile data application sever 6 via the mobile data network 3. Otherwise, the mobile terminal 2 performs a normal phone call processing if the number is not the informing phone number.

Here, the mobile terminal 2 can be a smart mobile phone, a palm computer, a laptop computer, etc. The phone call system 5 can be a common program-controlled switched phone system, a VolP system, a mobile phone system and the like. The mobile phone network 4 can be a cellular wireless phone network of any form, such as GSM, CDMA, WCDMA, CDMA2000, CDMA1X, etc. The mobile data network 3 can be any network executing Internet protocols (lPv4 and lPv6), such as GPRS, CDMA, 3G, WiFi, WiMAX, etc. The information system 7 has, for example, an email server, a group mail server and various management information systems. The information system 7 is connected with the mobile data application sever 6.

It should be noted that phone numbers corresponding to a plurality of mobile terminals are pre-stored in the mobile data application sever 6 and used to call these mobile terminals. In the mobile terminal 2, an informing phone number corresponding to the mobile data application sever 6 is stored in advance.

Thus, in the data push system of the present invention, the advantage of real time data push can be achieved, since the data push system of the present invention informs the mobile terminal by way of a phone call, and such phone call is only used to trigger the mobile terminal in performing data reception and needs not to be answered. Meanwhile, the present invention has a very small influence on the power consumption of the mobile terminal, since the mobile terminal is not required to continuously connect with the mobile data network. Further, the user will not burden any additional fees.

### Mobile terminal

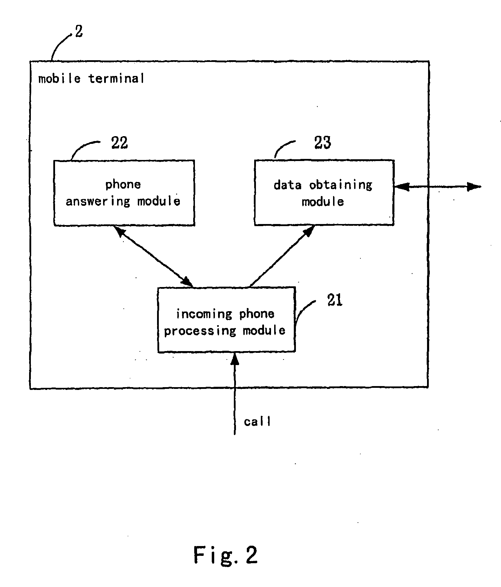

Fig. 2 shows a detailed block diagram of a mobile terminal 2 in the data push system 1 according to the present invention.

The mobile terminal 2 according to the present invention has the capability of accessing the mobile phone network 4 and the mobile data network 3. As shown in Fig.2, the mobile terminal 2 comprises an incoming phone processing module 21, a phone answering module 22 and a data obtaining module 23.

When the mobile terminal 2 receives an incoming call number from the phone call system 5 via the mobile phone network 4, the an incoming phone processing module 21 checks the received incoming call number according to an informing phone number that is pre-stored in the mobile terminal 2 and corresponds to the mobile data application sever 6.

If the received incoming call number is not the informing phone number, a normal phone call processing is performed by the phone answering module 22, such as displaying the incoming call number on the display screen (not shown) of the mobile terminal 2 for the user to select whether to answer this phone call.

If the received incoming call number is the informing phone number, the phone call will not be answered. Instead, the data obtaining module 23 is informed of the presence of data to be pushed in the mobile data application sever 6. Then, the data obtaining module 23 is connected to the mobile data application sever 6 via the mobile data network 3 and obtains the data to be pushed from the mobile data application sever 6. Here, the checking process and the data obtaining process can be displayed on the display screen of the mobile terminal 2. Alternatively, these processes may not be displayed. And the data to be pushed is obtained directly from the mobile data application sever 6, without intervention from the user throughout the processes. After the mobile terminal 2 completes the data reception, the data obtaining module 23 can inform the user of the reception of new or updated data in such indication modes as displaying on the display screen of the mobile terminal 2, buzzing or vibration.

### Mobile data application sever

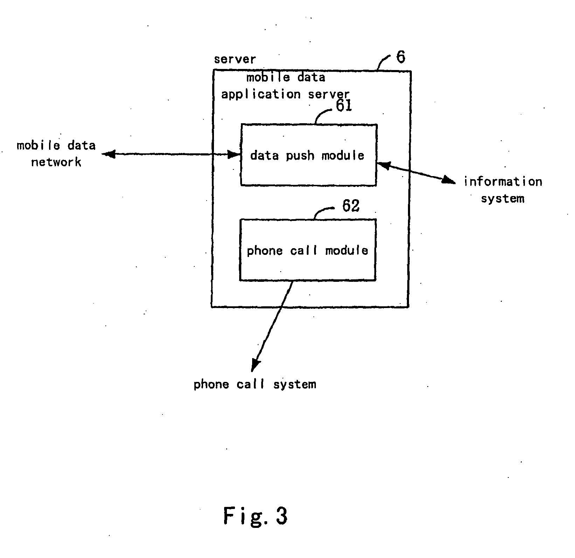

Fig. 3 shows a detailed block diagram of a mobile data application server 6 in the data push system 1 according to the present invention.

The mobile data application server 6 is primarily configured to convert data format of the data in the information system 7 so as to enable the data format to be adapted to be displayed on different mobile terminals, to forward data, i.e., forward data from the mobile terminal 2 to the information system 7 or forward data of the information system 7 to the mobile terminal 2, to perform access control, i.e., impose control over content accessible by the mobile terminal in the information system 7, and to push data, that is, push, from the information system 7 to the mobile terminal 2, the data needs to be pushed.

It should be noted, when the mobile terminal 2 accesses the information system 7 over the mobile data network 3, such access will be conducted via the mobile data application server 6. Thus, the mobile data application server 6 is in charge of pushing the data to be pushed in the information system 7 to the mobile terminal 2.

As shown in Fig.3, the mobile data application server 6 according to the present invention includes particularly a data push module 61 and a phone call module 62.

When t new or updated data to be pushed is presented in the information system 7, it informs the mobile data application server 6 that the data needs to be pushed to the mobile terminal 2. The mobile data application server 6 searches for its pre-stored phone number corresponding to the mobile terminal 2 and uses the phone call module 62 to inform the phone call system 5 of initializing a call.

It should be noted that the mobile data application server 6 may comprise a memory capable of pre-storing phone numbers for different mobile terminals of multiple users.

The phone call system 5 is connected with the phone call module 62 directly or via a network. The phone call module 62 can be a phone terminal of common program-controlled phone system or a phone terminal of the mobile phone system. In this case, the phone call system 5 is connected with the phone call module 62 in the form of a modem. Alternatively, the phone call system 5 can be a VolP system, and the phone call module 62 conducts a calling by using a VolP software.

To be noted, although this embodiment describes that the information system 7 informs autonomously the mobile data application server 6 of the existence of data to be pushed, the present invention is not limited to this scheme. Also, the mobile data application server 6 can check the information system 7 so as to learn in real time whether data to be pushed is present in the information system 7.

Now, a detailed explanation will be given to the flow of data push with reference to the specific structure of the data push system 1 shown in Figs. 1, 2 and 3.

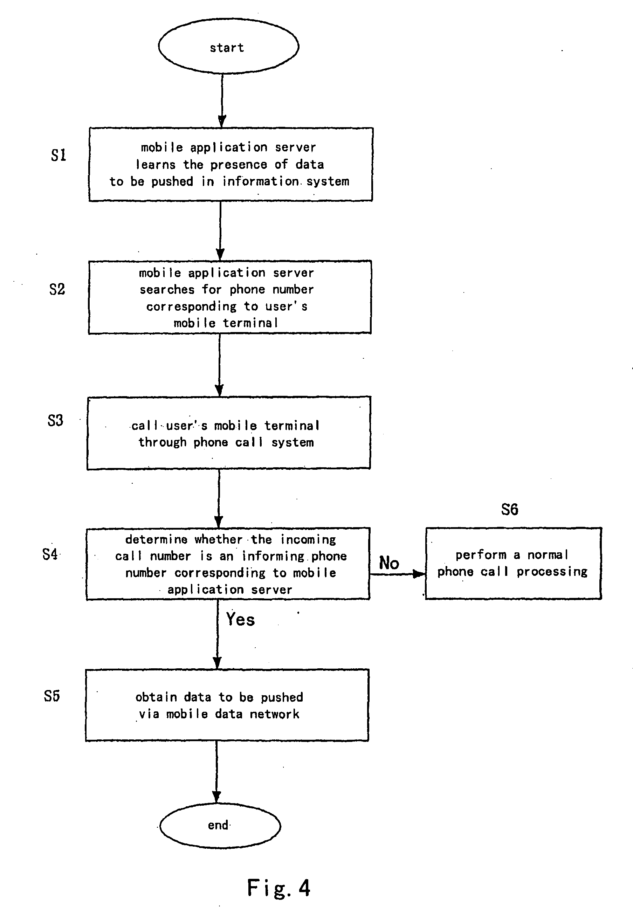

Fig. 4 shows a detailed flow of a data push method performed by the data push system 1 according to the present invention.

As shown in Fig. 4, the data push method comprises the following steps.

Step 1, the information system 7 informs the mobile data application server 6 of the presence of new or updated data to be pushed to the user when finding such data. Alternately, the mobile data application server 6 checks the information system 7 autonomously and learns in real time whether data to be pushed is present in the information system 7.

Step 2, the mobile data application server 6 searches for the phone number corresponding to the user's mobile terminal 2 from the pre-stored phone numbers.

Step 3, the mobile data application server 6 invokes the phone call system 5 to call the mobile terminal 2.

Step 4, the mobile terminal 2 checks the incoming call number from the phone call system 5 and determines whether the call number is the pre-stored informing phone number.

If the incoming call number is the informing phone number corresponding to the mobile data application server 6, the flow proceeds to Step 5, i.e., the mobile terminal 2 does not answer the phone call but entries the mobile data network 3 and connects with the mobile data application server 6 to obtain the data to be pushed.

If the incoming call number is not the informing phone number corresponding to the mobile data application server 6, the flow proceeds to Step 6, i.e., a normal phone call processing is performed.

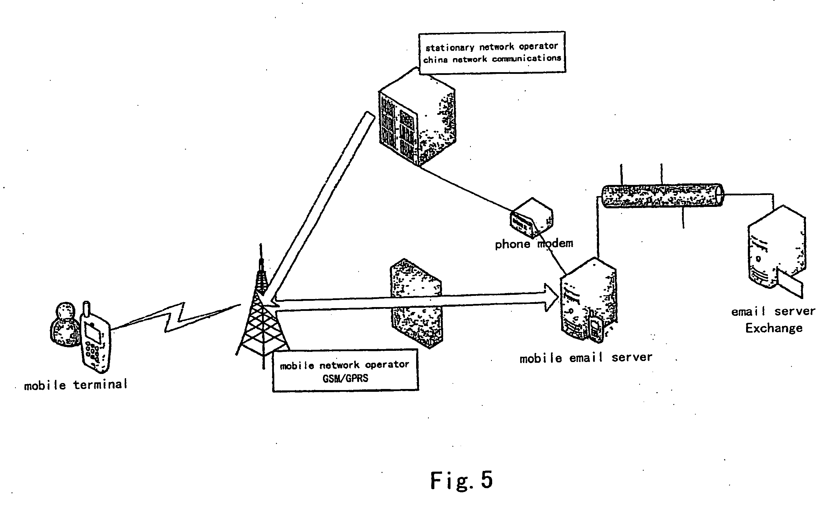

Fig. 5 shows an embodiment of the data push system 1 used for corporation email according to the present invention.

As shown in Fig.5, the data push system 1 includes the mobile terminal 2, GSM (the mobile phone network 4), GPRS (the mobile data network 3), a stationary network operator (China Network Communications, the phone call system 5), a mobile email server (the mobile data application server 6) and a corporation mobile email server (the information system 7).

Based on the flow shown in Fig. 4, the data push system in Fig. 5 can push a new mail to the mobile terminal used by a user when the new mail arrives at the corporation mobile email server.

Specifically, after the new mail arrives at the corporation mobile email server, the server informs the mobile email server of such arrival. The mobile email server searches for the phone number corresponding to the user from the pre-stored phone numbers and uses a phone modem to call the user's mobile terminal via GSM through the stationary network operator. Having received the phone call, the mobile terminal checks the incoming call number. If it determines that the number is the informing phone number corresponding to the mobile email server, the mobile terminal directly hangs up the phone call. Moreover, it receives the new mail from the corporation email server via GPRS through the mobile email server.

Thus, by the data push system, a new mail for a user, if any, can be automatically and timely pushed to the mobile terminal used by the user without any intermediate intervention from the user.

Further, by the data push method, the user can receive mails from the server without the need for continuous manual operation of the mobile terminal.

Thus, in the data push system and method of the present invention, the advantage of real time data push can be achieved, since the data push system and method of the present invention informs the mobile terminal by way of a phone call, and such phone call is only used to trigger the mobile terminal in performing data reception and needs not to be answered. Meanwhile, the present invention has a very small influence on the power consumption of the mobile terminal, since the mobile terminal is not required to continuously connect with the mobile data network. Further, the user will not burden any additional fees.

For those ordinarily skilled in the art, it is readily to envisage other advantages and variations from the above embodiment. Thus, the present invention is not limited to the above embodiment, which is merely an example for specific and demonstrative description of one form of the present invention. Within the scope of the present invention, those ordinarily skilled in the art can obtain various substitutive solutions based on the above embodiment. These solutions should fall into the scope defined by the claims and their equivalents.

## Claims

1. A data push system for pushing data to be pushed from a server to a mobile terminal, comprising
a server configured to, after learning data to be pushed is presented in an information system, search for the phone number corresponding to the mobile terminal from phone numbers pre-stored in the server and call the mobile terminal via a mobile phone network by using a phone call system, and
a mobile terminal configured to check an incoming call number from the phone call system according to an informing phone number that is pre-stored in the mobile terminal and corresponds to the server, not answer the phone call but obtain the data to be pushed from the sever via a mobile data network if the incoming phone number is the informing phone number, otherwise perform a normal phone call processing.

2. The data push system of Claim 1, wherein the information system autonomously informs the server of the presence of data to be pushed when such data is in the information system.

3. The data push system of Claim 1, wherein the server checks the information system to determine whether there is data to be pushed.

4. The data push system of Claim 2 or 3, wherein the mobile terminal comprises
an incoming phone processing module for checking the incoming call number and determining whether it is the informing phone number corresponding to the server,
a phone answering module for performing a normal phone call processing when the incoming phone processing module determines that the incoming call number is not the informing phone number, and
a data obtaining module for being connected with the server via the mobile data network and obtaining the data to be pushed when the incoming phone processing module determines that the incoming call number is the informing phone number.

5. The data push system of Claim 4, wherein the server comprises
a phone call module for calling the mobile terminal through the phone call system according to the pre-stored phone number corresponding to the mobile terminal, and
a data push module for obtaining by the mobile terminal the data to be pushed from the server.

6. The data push system of Claim 5, wherein the phone call module is connected with the phone call system directly or via a network.

7. The data push system of Claim 6, wherein the mobile terminal is a smart mobile phone, a palm computer or a laptop computer, the phone call system is a common program-controlled switched phone system, a VolP system or mobile phone system, the mobile phone network is GSM, CDMA, WCDMA, CDMA2000 or CDMA1X, the mobile data network is GPRS, CDMA, 3G, WiFi or WiMAX, and the information system is an email server, a group mail server or a management information system.

8. A data push method for pushing data to be pushed from a server to a mobile terminal, comprising
when data to be pushed is presented in an information system, searching for the phone number corresponding to the mobile terminal from phone numbers pre-stored in the server and calling the mobile terminal via a mobile phone network by using a phone call system, and
checking an incoming call number from the phone call system according to an informing phone number that is pre-stored in the mobile terminal and corresponds to the server, not answer the phone call but obtain the data to be pushed from the sever via a mobile data network if the incoming phone number is the informing phone number, otherwise perform a normal phone call processing.

9. The data push method of Claim 8, wherein the information system autonomously informs the server of the presence of data to be pushed when such data is in the information system.

10. The data push method of Claim 9, wherein the server checks the information system to determine whether there is data to be pushed.

11. The data push method of Claim 9 or 10, wherein the mobile data application server is connected with the phone call system directly or via a network.

12. The data push method of Claim 11, wherein the mobile terminal, after completing the reception of the data to be pushed, informs the user the reception of the new data in the form of displaying on the mobile terminal, buzzing or vibration.

13. The data push method of Claim 12, wherein the mobile terminal is a smart mobile phone, a palm computer or a laptop computer, the phone call system is a common program-controlled switched phone system, a VolP system or a mobile phone system, the mobile phone network is GSM, CDMA, WCDMA, CDMA2000 or CDMA1X, the mobile data network is GPRS, CDMA, 3G, WiFi or WiMAX, and the information system is an email server, a group mail server or a management information system.
